# EUROPÄISCHE PATENTSCHRIFT

(11) **EP 3 321 583 B1**
(45) Veröffentlichungstag und Bekanntmachung des Hinweises auf die Patenterteilung: **17.03.2021**
(21) Anmeldenummer: 17200874.0
(22) Anmeldetag: 09.11.2017
(51) Int. Cl.: F23R 3/00

(54) **BRENNKAMMER EINER GASTURBINE MIT ZUMINDEST EINER SCHINDEL**
COMBUSTION CHAMBER OF A GAS TURBINE WITH AT LEAST A TILE
CHAMBRE DE COMBUSTION D'UNE TURBINE À GAZ AVEC AU MOINS UN ÉCRAN THERMIQUE

(30) Priorität: 10.11.2016 DE 102016222099
(43) Veröffentlichungstag der Anmeldung: 16.05.2018
(73) Patentinhaber: Rolls-Royce Deutschland Ltd & Co KG, 15827 Blankenfelde-Mahlow (DE)
(72) Erfinder: GERENDÁS, Dr.-Ing. Miklós, 15827 Blankenfelde-Mahlow (DE)
(74) Vertreter: Hoefer & Partner Patentanwälte mbB

(56) Entgegenhaltungen:
- DE-A1- 10 158 548
- DE-A1-102012 025 375
- GB-A- 2 160 964

## Beschreibung

Die Erfindung bezieht sich auf eine Brennkammer einer Gasturbine gemäß den Merkmalen des Oberbegriffs des Anspruchs 1.

Im Einzelnen bezieht sich die Erfindung auf eine Brennkammer einer Gasturbine, welche mit Schindeln belegt ist. Die zumindest eine Schindel umfasst einen plattenförmigen Schindelkörper, welcher einen umlaufenden Schindelrand aufweist. Dieser erstreckt sich von der kalten, dem Brennkammerinnenraum abgewandten Seite des Schindelkörpers aus zur Brennkammerwand und bildet somit zwischen dem Schindelkörper und der Brennkammerwand einen Zwischenraum. In diesen Zwischenraum wird Kühlluft durch Prallkühllöcher eingeleitet, welche nachfolgend durch Effusionskühllöcher des Schindelkörpers an dessen Oberfläche ausgeleitet wird. Zu diesem Zwecke ist der Schindelkörper mit einer Anordnung von Effusionskühllöchern versehen, welche beispielsweise reihenförmig oder in anderer Anordnung zueinander ausgebildet sind. Auch die Prallkühllöcher der Schindelwand sind in einer geeigneten Anordnung ausgebildet.

Zum Stand der Technik wird zunächst auf die EP 0 576 435 B1 verwiesen. Diese zeigt einen in Fig. 2 dargestellten Aufbau. Dabei ist ersichtlich, dass eine Schindel 25 einen im Wesentlichen plattenförmigen Schindelkörper 29 aufweist, welcher von einem Schindelrand 31 begrenzt wird. Der Schindelrand 31 erstreckt sich zur Bildung eines Zwischenraums 35 von dem Schindelkörper 29 aus in Richtung auf die Brennkammerwand 32. Die Brennkammerwand 32 ist mit Prallkühllöchern 34 versehen, um Kühlluft in den Zwischenraum 35 einzuführen. Diese Kühlluft strömt durch Effusionskühllöcher 33, welche in dem Schindelkörper 29 ausgebildet sind, aus dem Zwischenraum 35. Da der Schindelrand 31 nicht dichtend gegen die Brennkammerwand 32 angelegt werden kann, ergibt sich stets eine Leckage, welche als Leckageluft 36 dargestellt ist. Somit strömt ein Teil des Luftvolumens, welches durch die Prallkühllöcher 34 zugeführt wird, ungenutzt als Leckageluft 36 aus dem Zwischenraum 35 aus und kann nicht für eine Durchströmung der Effusionskühllöcher 33 verwendet werden.

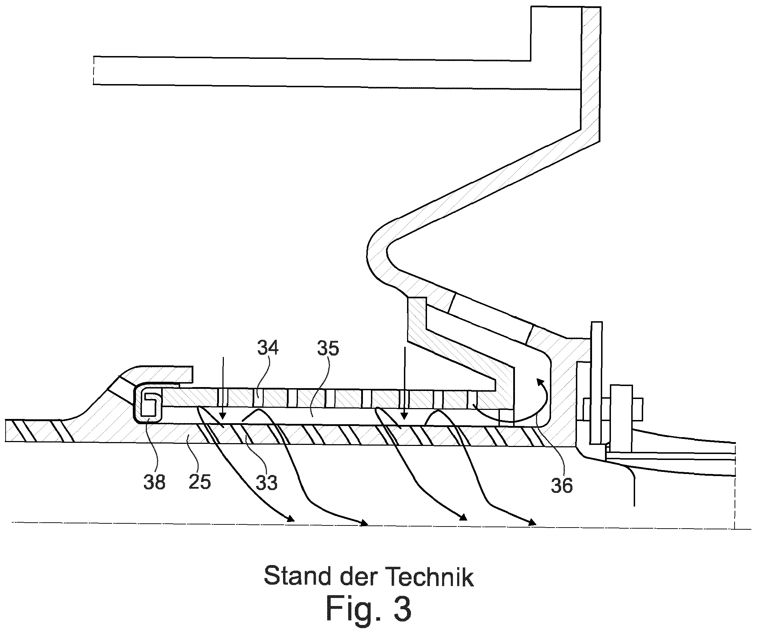

Die Fig. 3 zeigt einen ähnlichen Aufbau, wobei gleiche Teile mit gleichen Bezugsziffern versehen sind. Hierzu wird auf die US 5,598,697 A verwiesen. Diese Konstruktion unterscheidet sich zwar von dem erfindungsgemäßen Konstruktionsprinzip, sie zeigt jedoch, dass aus dem Zwischenraum 35 entweder Leckageluft 36 abströmen kann, welche nicht für die Effusionskühllöcher 33 genutzt werden kann oder eine Dichtung 38 eingesetzt werden muss.

Die Abdichtung der Prallkühlkavität durch eine zusätzliche Dichtung ist auch aus der EP2354660 (starre Dichtung), EP1310735 (biege-elastische Dichtung), US7140185 (Beschichtung) bekannt. Allen dichtungsbasierten Lösungen sind gemeinsam die höheren Kosten durch die Herstellung der Dichtung, der größere Montageaufwand durch die Montage der Dichtung und das Risiko des Ausfalls der Dichtung.

Es zeigt sich somit im Stand der Technik das Problem, dass eine Abdichtung des Zwischenraums zwischen der Schindel und der Brennkammerwand nicht ohne zusätzlichen Aufwand oder nur bedingt möglich ist. Hierdurch ergibt sich eine Leckageluft oder Leckageströmung, durch welche Kühlluft aus dem Zwischenraum zwischen der Brennkammerwand und dem Schindelkörper ungenutzt ausströmt und nicht zur Kühlung durch die Effusionskühllöcher zur Verfügung steht.

Weiterhin wird als Stand der Technik die EP 1 351 022 B1 genannt.

Ferner ist aus GB 2 160 964 A eine Gasturbinenbrennkammer mit Prallluftkühlung von Auskleidungsplatten, welche zusammen mit einem Strukturrahmen die Brennkammer ausbilden, bekannt.

DE 101 58 548 A1 zeigt weiterhin eine Brennkammerschindel für eine Gasturbine mit mehreren Kühllöchern mit unterschiedlicher Winkelausrichtung.

Ferner zeigt DE 10 2012 025 375 A1 ein Verfahren zur Anordnung von Prallkühllöchern und Effusionskühllöchern in einer Brennkammerwand einer Gasturbine.

Der Erfindung liegt die Aufgabe zugrunde, eine Brennkammer einer Gasturbine zu schaffen, welche bei einfachem Aufbau und einfacher, kostengünstiger Herstellbarkeit eine effektive Nutzung der Kühlluft im Bereich der Schindel sicherstellt.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass die Anordnung der Prallkühllöcher zum Schindelrand einen Abstand aufweist, welcher zwischen dem 1,5-fachen und 2-fachen des Abstands der Oberfläche der Brennkammerwand zur Oberfläche des Schindelkörpers beträgt und dass in den Eckbereichen der Schindel der Abstand der Anordnung der Prallkühllöcher zwischen 1,1 und 3 des oben genannten Abstands beträgt.

Der Erfindung liegt das Grundprinzip zugrunde, die Einströmung der Kühlluft in den durch die Schindel gebildeten Zwischenraum so zu gestalten, dass die Zuführung der Kühlluft durch die Prallkühllöcher im mittleren Bereich des Schindelkörpers, d.h., bis zu einem Abstand vom Schindelrand erfolgt. Da die Effusionskühllöcher sich über die gesamte Fläche des Schindelkörpers erstrecken, kann die Kühlluft durch die ausreichend dimensionierten Effusionskühllöcher abströmen. Diese Strömung der Luft wird durch die sich ergebende Druckdifferenz über die Schindel hervorgerufen. Bei einem vollständig abgedichteten Schindelrand durchströmt die Luft sämtliche der Effusionsbohrungen, ohne dass Totzonen der Strömung gebildet werden. Bei einer unvollständigen Abdichtung bewirkt der Druckgradient in dem Zwischenraum, dass nur sehr geringe Luftmengen als Leckageluft über den Schindelrand strömen. Insgesamt ergibt sich somit für die durch die Prallkühllöcher einströmende Kühlluft wenig Veranlassung, als Leckageluft über den Schindelrand auszutreten.

Bei den aus dem Stand der Technik vorbekannten Konstruktionen von doppelwandigen Brennkammern wird die Schindel üblicherweise ohne Dichtungen auf die Brennkammerwand aufgeschraubt. Derartige Dichtungen wären aufwendig und kostenintensiv. Zudem führen thermische Expansionen und Kontraktionen stets zu einer geringfügigen Spaltbildung. Hinzu kommen Fertigungstoleranzen, welche ebenfalls eine vollständig dichtende Anlage des Schindelrandes an der Brennkammerwand ausschließen. Weiterhin ist zu beachten, dass die Geometrie von Brennkammern von Gasturbinen sehr komplex ist und nicht immer eine vollständige Abdichtung des Schindelrandes ermöglicht. In diesem Zusammenhang ist darauf hinzuweisen, dass der Fachmann versteht, was unter dem Begriff "Gasturbine" zu verstehen ist, nämlich eine Fluggasturbine oder eine stationäre Gasturbine. Bei beiden ist die Erfindung einsetzbar. Durch die erfindungsgemäße Lösung ist es somit möglich, im Wesentlichen das gesamte Volumen der Kühlluft für die Kühlung der Schindeln zu verwenden, einerseits zur Kühlung der kalten, dem Brennkammerinnenraum abgewandten Oberfläche der Schindel durch Prallkühlung, und zum anderen durch Filmkühlung mittels der durch die Effusionskühllöcher austretenden Luft. Da sich erfindungsgemäß eine erhebliche oder vollständige Verminderung der Leckageströmung ergibt, resultiert die vorliegende Erfindung in einer erheblichen Steigerung der Effektivität der Schindelkühlung.

Erfindungsgemäß ist somit vorgesehen, die Prallkühllöcher nicht bis zum Schindelrand auszubilden, sondern die Anordnung der Prallkühllöcher so zu wählen, dass jedes Prallkühlloch von jedem Schindelrand, durch welchen eine Leckage auftreten könnte, einen Abstand aufweist. Dieser Abstand ist so gewählt, dass er sich auf der Basis der freien Strahllänge des Prallkühlstrahls definiert. Die freie Strahllänge ist die Weglänge zwischen dem Austritt der Kühlluft aus dem Prallkühlloch und dem Auftreffen auf die dem Brennkammerinnenraum abgewandte kalte Oberfläche des Schindelkörpers. Durch diese freie Strahllänge ist auch das Volumen des Zwischenraums zwischen der Brennkammerwand und dem Schindelkörper definiert. Bevorzugt wird der Abstand der Prallkühllöcher vom Schindelrand so bemessen, dass er mindestens dem 1,5-fachen der freien Strahllänge des Prallkühlstrahls entspricht. Der Abstand kann bis zum 2-fachen der freien Strahllänge betragen, dieser Wert ist ein bevorzugter Wert. Durch die Definition des Abstandes ist somit sichergestellt, dass zwischen dem Randbereich der Anordnung mit Prallkühllöchern oder des Feldes, welches durch die Prallkühllöcher gebildet wird und dem Schindelrand eine ausreichende Anzahl an Effusionslöchern vorhanden sind. Die Kühlluft, welche durch die randseitigen Prallkühllöcher austritt und sich in Richtung zum Schindelrand bewegen möchte, trifft somit auf eine ausreichende Anzahl an Effusionslöchern und kann durch diese abgeführt werden. Ein Austritt dieser Luftströmung als Leckageluft wird somit verhindert.

Brennkammerschindeln sind üblicherweise rechteckig, seltener dreieckig oder rautenförmig, ausgebildet. Somit ergibt sich ein Eckbereich der Schindelränder, in welchem die beiden benachbarten, sich im Eckbereich treffenden Randbereiche, in denen keine Prallkühllöcher vorhanden sind, treffen. Um sicherzustellen, dass auch in den Eckbereichen eine ausreichende Abströmung der Prallkühlluft durch die Effusionskühllöcher sichergestellt wird, ist zu beachten, dass sich vorzugsweise die Randabstände zwischen dem Schindelrand und der Anordnung der Prallkühllöcher linear addieren. Bevorzugt wird dabei in der Anordnung der Prallkühllöcher eine Abschrägung oder Abrundung gebildet. Dieser abgeschrägte oder abgerundete Bereich wird in günstiger Ausgestaltung durch einen Faktor definiert, welcher als Überlagerungskonstante bezeichnet werden kann. Diese Überlagerungskonstante weist einen Wert von 1,1 bis 3, bevorzugt von 1,5 bis 2,5, idealerweise von 2, auf. Um diesen Faktor der Überlagerungskonstante wird im Eckbereich der Abstand vergrößert, um die gewünschte Durchströmung des Zwischenraums zwischen dem Schindelkörper und der Brennkammerwand sicherzustellen.

Erfindungsgemäß ergibt sich somit für die Anordnung der Prallkühllöcher eine geringere projizierte Fläche, als für die Anordnung der Effusionskühllöcher. Die Anordnung der Prallkühllöcher ist somit von dem Schindelrand abgerückt und hält zu diesem einen Abstand ein. Um bei dieser Ausgestaltung eine zuverlässige Durchströmung mit Kühlluft und den Aufbau eines geeigneten Druckgradienten zu gewährleisten, ist es vorzugsweise möglich, die Prallkühllöcher jeweils mit einem vergrößerten Durchmesser auszubilden, verglichen mit der Ausgestaltung gemäß dem Stand der Technik, bei welchem sich die Anordnung der Prallkühllöcher über die gesamte Fläche der Schindel erstreckt. Alternativ hierzu ist es auch möglich, eine größere Anzahl an Prallkühllöchern, verglichen mit dem Stand der Technik, vorzusehen, um das Kühlluftvolumen zuzuführen. Hierbei können die Prallkühllöcher im Bereich der Anordnung der Prallkühllöcher dichter aneinander gesetzt werden, um randnahe Prallkühllöcher innerhalb des Abstands zum Schindelrand zu vermeiden.

Im Folgenden wird die Erfindung anhand von Ausführungsbeispielen in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine Darstellung zum Stand der Technik,
- Fig. 3: eine Darstellung zum Stand der Technik,
- Fig. 4: eine schematische Seitenansicht eines ersten Ausführungsbeispiels der Erfindung,
- Fig. 5: eine Darstellung, analog Fig. 4, eines weiteren Ausführungsbeispiels der Erfindung,
- Fig. 6: eine vereinfachte Darstellung, analog Fig. 5, mit Darstellung möglicher Leckageströmungen,
- Fig. 7: eine Draufsicht auf ein erstes Ausführungsbeispiel der Eckgestaltung, und
- Fig. 8: eine Ansicht, analog Fig. 7, eines weiteren Ausführungsbeispiels.

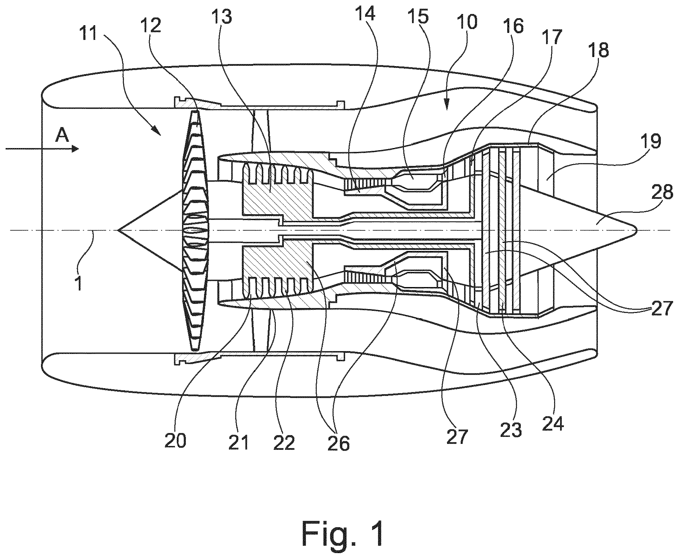

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Kerntriebwerksgehäuse 21 in einen ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenrotorschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenrotorschaufeln 24 drehen sich im Betrieb um die Triebwerksachse 1.

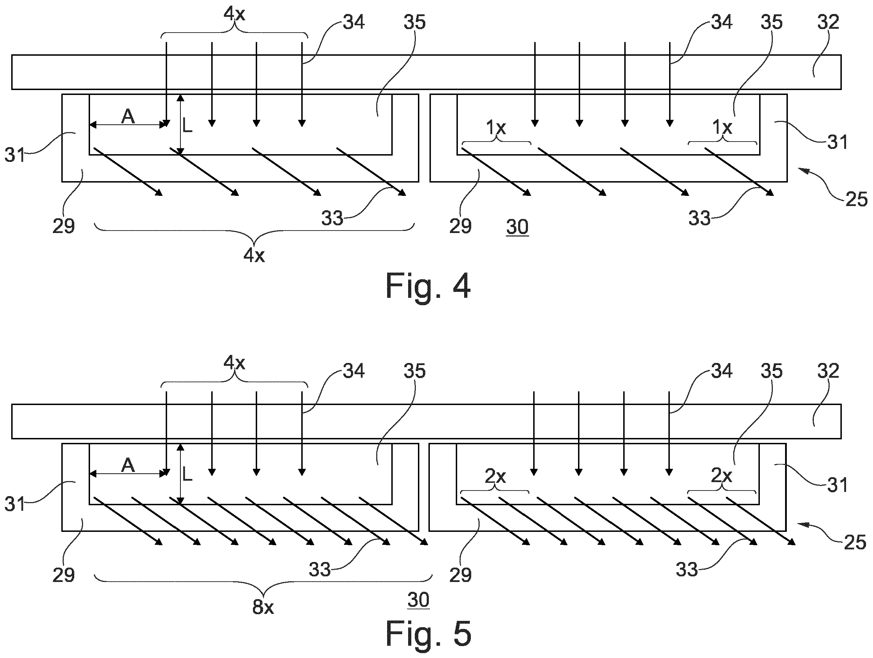

Die Fig. 4 bis 6 zeigen jeweils vereinfachte Schnittansichten in einer die nicht dargestellte Mittelachse einer Brennkammer 15 umfassenden Schnittebene. Dabei ist schematisch eine Brennkammerwand 32 dargestellt, welche mit einer Anordnung von Prallkühllöchern 34 versehen ist. Zur Vereinfachung der Darstellung sind die Prallkühllöcher 34, ebenso wie die nachfolgend zu beschreibenden Effusionskühllöcher 33, nur durch die Strömungsrichtung als Strömungspfeil gezeigt.

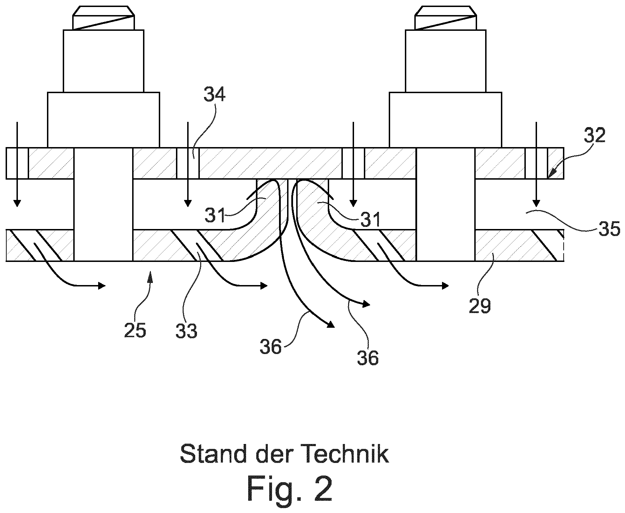

An der einem Brennkammerinnenraum 30 zugewandten Seite der Brennkammerwand 32 sind Schindeln 25 angeordnet, welche beispielsweise verschraubt werden können, so wie dies in Fig. 2 gezeigt ist. Die Schindeln weisen einen plattenförmigen, im Wesentlichen flachen Schindelkörper 29 auf, welcher mit den Effusionskühllöchern 33 versehen ist. Am Randbereich des Schindelkörpers 29 ist ein umlaufender Schindelrand 31 ausgebildet, welcher gegen die Brennkammerwand 32 anliegt. Die Höhe des Schindelrands 31 definiert das Volumen eines Zwischenraums 35, in welchen Prallkühlluft einströmt, welche nachfolgend durch die Effusionskühllöcher 33 abgeleitet wird. Die Höhe des Zwischenraums 35 und damit das Volumen des Zwischenraums 35 wird durch die in den Fig. 4 und 5 dargestellte freie Strahllänge L der Prallkühlluft oder des Prallkühlstrahls definiert.

Wie in den Fig. 4 bis 6 dargestellt, ist die Anordnung der Prallkühllöcher 34 von dem Schindelrand 31 um einen Abstand A beabstandet. Die Effusionskühllöcher 33 sind über die gesamte Fläche des Schindelkörpers 29 verteilt.

Die Fig. 4 zeigt ein Ausführungsbeispiel, bei welchem das Verhältnis der Anzahl von Prallkühllöchern zu Effusionskühllöchern 1:1 beträgt. Erfindungsgemäß ist bei diesem Ausführungsbeispiel der Abstand A so gewählt, dass sich zwischen dem Rand des nächsten Prallkühllochs 34 und dem Schindelrand 31 eine Reihe von Effusionskühllöchern befindet, so wie dies in der rechten Hälfte der Fig. 4 dargestellt ist.

Bei dem in Fig. 5 gezeigten Ausführungsbeispiel beträgt das Verhältnis von Prallkühllöchern zu Effusionskühllöchern 1:2. Folglich sind in dem Abstandsbereich A zwischen dem Schindelrand 31 und der Anordnung von Prallkühllöchern 34 zwei Reihen von Effusionskühllöchern 33 vorgesehen.

Bei einem Verhältnis von Prallkühllöchern zu Effusionskühllöchern von 1:3 würden sich dann drei Reihen von Effusionslöchern in dem Abstandsbereich A befinden. Diese Ausgestaltung ist nicht gezeigt.

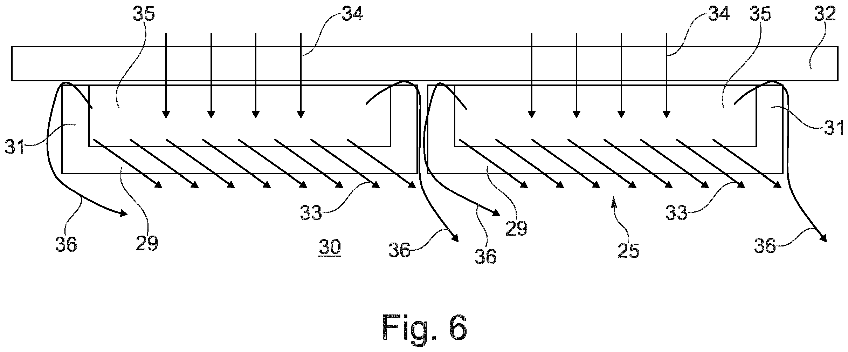

Die Fig. 6 zeigt eine Darstellung analog Fig. 5, aus welcher sich ergibt, dass im ungünstigsten Fall eine nur sehr geringe Leckageluftströmung 36 über den Schindelrand 31 aus dem Zwischenraum 35 ausströmen würde, wenn der Schindelrand 31 sehr ungenügend gegen die Brennkammerwand 32 abgedichtet wäre.

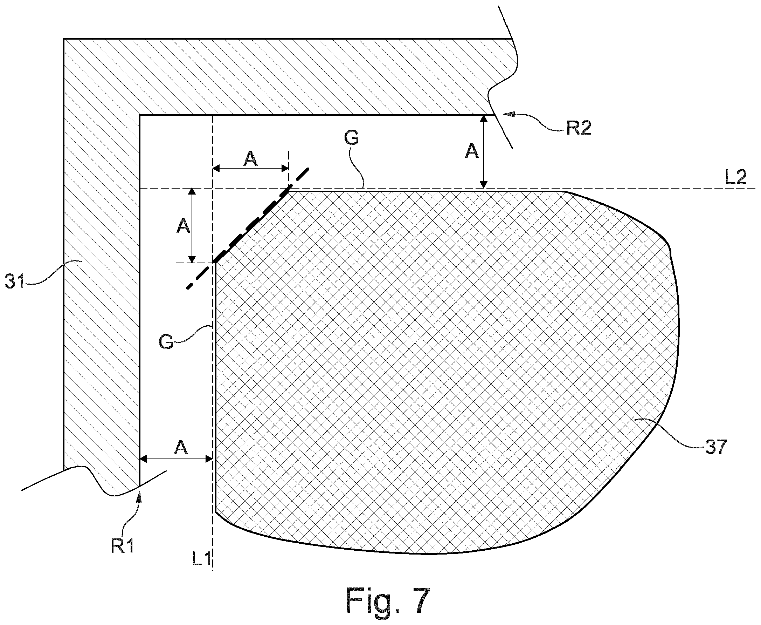

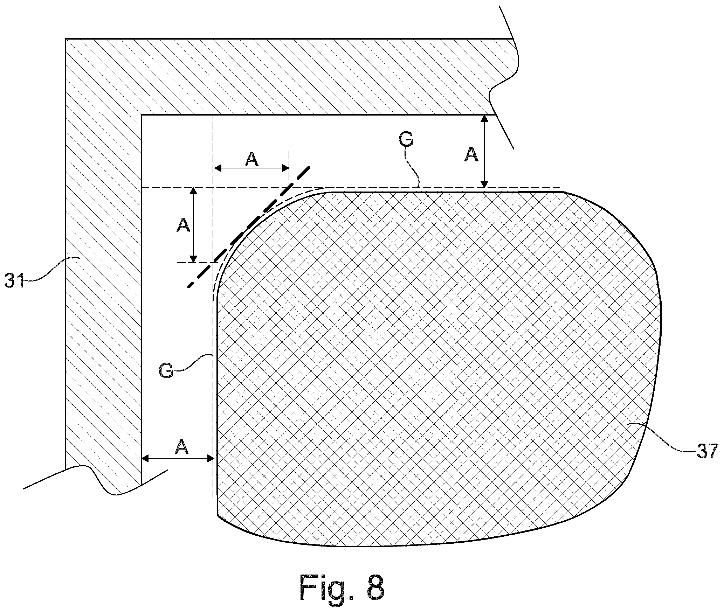

Die Fig. 7 und 8 zeigen jeweils eine vereinfachte Draufsicht auf die erfindungsgemäße Ausgestaltung in schematischer Darstellung. Dabei ist insbesondere der Schindelrand 31 dargestellt, welcher eine Auflagefläche der Schindel ergibt, so wie dies die Fig. 4 bis 6 zeigen. Mit dem Bezugszeichen 37 ist ein Feld der Prallkühllöcher gezeigt, ohne die einzelnen Prallkühllöcher und deren Anordnung zu beschreiben. Diese können in geeigneter Weise angeordnet sein, die spezielle Anordnung der Prallkühllöcher spielt für die Erfindung keine wesentliche Rolle. Wichtig ist vielmehr, dass sich zwischen der der Anordnung der Prallkühllöcher 34 zugewandten Seite des Schindelrands 31 ein Abstand A ergibt, in welchem keine Prallkühllöcher und somit keine Prallbelochung vorliegt. Die Fig. 7 und 8 zeigen die Innenseite des Schindelrands 31 als Rand R1 bzw. R2. Weiterhin zeigen die Fig. 7 und 8 jeweils den Abstand A zwischen dem Rand R1 bzw. R2 und einer Grenze G des Felds 37 der Prallkühllöcher.

Wie die Fig. 7 zeigt, addieren sich erfindungsgemäß die Abstände A an den Ecken des Feldes 37, so dass es zu einer Abschrägung des Feldes 37 kommt. In den Ecken der Schindel 25 addieren sich somit die Randabstände A so, dass sich bei einem Abstand vom ersten Rand R1 der Auflagefläche des Schindelrandes 31 der Schindel 25 ein Wert A ergibt. Vom zweiten Rand R2 der Auflagefläche des Schindelrands 31 der Schindel ergibt sich ebenfalls ein Wert A. Das Feld 37 der Prallkühllöcher (Prallkühlmuster) endet somit entlang einer Linie L1 parallel zum Rand R1 und in einem Abstand entlang einer Linie L2 parallel zum Rand R2. Hierdurch wird der Abstand A definiert. Die Grenze des Feldes 37 der Prallkühllöcher ist mit G als gestrichelte Linie eingezeichnet. In den Ecken weist das Feld 37 des Prallkühlmusters auf der Linie L1 entlang des Randes R1 einen Abstand C x A auf. Analog ergibt sich hinsichtlich des Randes R2 und der Linie der Grenze G des Prallkühlmusters ein Abstand von C x A. Der Faktor C ist als Überlagerungskonstante definiert und beträgt im Allgemeinen zwischen 1,1 und 3, bevorzugterweise zwischen 1,5 und 2,5, idealerweise 2. Mit C=1 (Stand der Technik) würde die Prallbelochung entlang der Linie L1 bis zur Kreuzung mit der Linie L2 an den Rand R2 reichen. Der Idealzustand mit einem Abstand von 2 x A von der Prallkühlbelochung entlang der Linie L1 zum Rand R2 ist in Fig. 7 dargestellt. Es ergibt sich somit, wie in Fig. 7 gezeigt, ein zusätzlicher Eckbereich in Form eines gleichseitigen Dreiecks, in welchem keine Prallkühllöcher vorgesehen sind.

Die Fig. 8 zeigt eine Variante, bei welcher das Feld 37 der Prallkühllöcher im Eckbereich abgerundet ist, so dass die Grenze G dort in Form eines Kreisbogens verläuft.

Somit sind erfindungsgemäß zur Verminderung von Randleckagen aus einer pralleffusionsgekühlten Schindel die Öffnungen für die Prallkühlung in einem Abstand A vom Rand der Schindel platziert, so dass zwischen der randnächsten Prallkühlöffnung und der Innenseite des Randes der Schindel Effusionskühllöcher angeordnet werden können, um eine Ausströmung der Kühlluft aus den Prallkühllöchern durch die Effusionskühllöcher sicherzustellen und eine Randleckage zu vermeiden. Der Abstand vom Rand der Schindel, in welchem keine Prallkühllöcher vorgesehen sind, beträgt mindestens 2 x die freie Weglänge des Prallkühlstrahls innerhalb des durch die Schindel gebildeten Zwischenraums.

### Bezuaszeichenliste:

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Kerntriebwerksgehäuse
- 22: Kompressorlaufschaufeln
- 23: Leitschaufeln
- 24: Turbinenrotorschaufeln
- 25: Schindel
- 26: Kompressortrommel oder -scheibe
- 27: Turbinenrotornabe
- 28: Auslasskonus
- 29: Schindelkörper
- 30: Brennkammerinnenraum
- 31: Schindelrand
- 32: Brennkammerwand
- 33: Effusionskühlloch
- 34: Prallkühlloch
- 35: Zwischenraum
- 36: Leckageluft
- 37: Feld der Prallkühllöcher
- 38: Dichtung
- A: Abstand
- G: Grenze
- L: freie Strahllänge
- R1: Rand
- R2: Rand

## Patentansprüche

1. Brennkammer einer Gasturbine, mit einer Brennkammerwand (32) und mit zumindest einer Schindel (25), welche einen plattenförmigen Schindelkörper (29) umfasst, welcher einen umlaufenden, von der den Brennkammerinnenraum (30) abgewandten Seite erhabenen Schindelrand (31) aufweist, welcher in montiertem Zustand der Schindel (25) gegen die Brennkammerwand (32) anliegt, wobei der Schindelkörper (29) mit einer Anordnung von Effusionskühllöchern (33) und die Brennkammerwand (32) im Bereich der Schindel (25) mit einer Anordnung von Prallkühllöchern (34) versehen sind, wobei die Anordnung der Effusionskühllöcher (33) den gesamten Schindelkörper (29) umfasst, und wobei innerhalb des Abstands (A) Effusionskühllöcher (33) angeordnet sind, und die Anordnung von Prallkühllöchern (34) zum Schindelrand (31) einen seitlichen Abstand (A) aufweist, welcher zwischen dem 1,5- und dem 2-fachen des Abstands der Oberfläche der Brennkammerwand (32) zur Oberfläche des Schindelkörpers (29) beträgt, **dadurch gekennzeichnet, dass** in den Eckbereichen der Schindel (25), in welchen sich jeweils benachbarte Schindelränder (31) treffen, der Abstand der Anordnung der Prallkühllöcher (34) zwischen 1,1 und 3 des seitlichen Abstands (A) beträgt.

2. Brennkammer nach Anspruch 1, **dadurch gekennzeichnet, dass** der Abstand in den Eckbereichen zwischen 1,5 und 2,5 des Abstands (A) beträgt.

3. Brennkammer nach Anspruch 1 oder 2, **dadurch gekennzeichnet, dass** der Eckbereich der Anordnung von Prallkühllöchern (34) geradlinig ausgebildet ist.

4. Brennkammer nach Anspruch 1 oder 2, **dadurch gekennzeichnet, dass** der Eckbereich der Anordnung von Prallkühllöchern (34) abgerundet ausgebildet ist.

5. Brennkammer nach Anspruch 1, **dadurch gekennzeichnet, dass** das Verhältnis der Anzahl der Prallkühllöcher (34) und der Anzahl der Effusionskühllöcher (33) 1:1 bis 1:3 beträgt.

6. Brennkammer nach Anspruch 5, **dadurch gekennzeichnet, dass** jeweils zumindest eine Reihe von Effusionskühllöchern (33) innerhalb des Abstands (A) angeordnet ist, wobei die Anzahl der Reihen von Effusionskühllöchern (33) innerhalb des Abstands (A) dem Verhältnis der Anzahl der Prallkühllöcher (34) und der Anzahl der Effusionskühllöcher (33) gleich ist.

## Claims

1. Combustion chamber of a gas turbine, with a combustion chamber wall (32) and with at least one shingle (25) which comprises a plate-shaped shingle body (29) which has a peripheral shingle edge (31) which is elevated from the side which faces away from the combustion chamber interior (30), which shingle edge (31) bears against the combustion chamber wall (32) in the mounted state of the shingle (25), the shingle body (29) being provided with an arrangement of effusion cooling holes (33), and the combustion chamber wall (32) being provided with an arrangement of impingement cooling holes (34) in the region of the shingle (25), the arrangement of effusion cooling holes (33) comprising the entire shingle body (29), and effusion cooling holes (33) being arranged within the spacing (A), and the arrangement of impingement cooling holes (34) being at a lateral spacing (A) from the shingle edge (31), which lateral spacing (A) is between 1.5 and 2 times the spacing of the surface of the combustion chamber wall (32) from the surface of the shingle body (29), **characterized in that** the spacing of the arrangement of the impingement cooling holes (34) is between 1.1 and 3 times the lateral spacing (A) in those corner regions of the shingle (25), in which mutually adjoining shingle edges (31) meet.

2. Combustion chamber according to Claim 1, **characterized in that** the spacing in the corner regions is between 1.5 and 2.5 times the spacing (A).

3. Combustion chamber according to Claim 1 or 2, **characterized in that** the corner region of the arrangement of impingement cooling holes (34) is of rectilinear configuration.

4. Combustion chamber according to Claim 1 or 2, **characterized in that** the corner region of the arrangement of impingement cooling holes (34) is of rounded configuration.

5. Combustion chamber according to Claim 1, **characterized in that** the ratio of the number of impingement cooling holes (34) and the number of effusion cooling holes (33) is from 1:1 to 1:3.

6. Combustion chamber according to Claim 5, **characterized in that** in each case at least one row of effusion cooling holes (33) is arranged within the spacing (A), the number of rows of effusion cooling holes (33) within the spacing (A) being identical to the ratio of the number of impingement cooling holes (34) and the number of effusion cooling holes (33).

## Revendications

1. Chambre de combustion d'une turbine à gaz, comprenant une paroi de chambre de combustion (32) et au moins un bardeau (25) qui comprend un corps de bardeau (29) en forme de plaque qui présente un bord de bardeau périphérique (31) rehaussé depuis le côté opposé à l'espace intérieur de la chambre de combustion (30), qui, dans l'état monté du bardeau (25), s'applique contre la paroi de chambre de combustion (32), le corps de bardeau (29) étant pourvu d'un agencement de trous de refroidissement par effusion (33) et la paroi de chambre de combustion (32) étant pourvue, dans la région du bardeau (25), d'un agencement de trous de refroidissement par impact (34), l'agencement des trous de refroidissement par effusion (33) comprenant l'ensemble du corps de bardeau (29) et des trous de refroidissement par effusion (33) étant disposés à l'intérieur de la distance (A), et l'agencement de trous de refroidissement par impact (34) présentant une distance latérale (A) par rapport au bord de bardeau (31), laquelle vaut entre 1,5 et 2 fois la distance de la surface de la paroi de chambre de combustion (32) à la surface du corps de bardeau (29), **caractérisée en ce que** dans les régions de coin du bardeau (25) dans lesquelles des bords de bardeau (31) respectivement adjacents se rejoignent, la distance de l'agencement des trous de refroidissement par impact (34) vaut entre 1,1 et 3 fois la distance latérale (A).

2. Chambre de combustion selon la revendication 1, **caractérisée en ce que** la distance dans les régions de coin vaut entre 1,5 et 2,5 fois la distance (A).

3. Chambre de combustion selon la revendication 1 ou 2, **caractérisée en ce que** la région de coin de l'agencement de trous de refroidissement par impact (34) est réalisée sous forme rectiligne.

4. Chambre de combustion selon la revendication 1 ou 2, **caractérisée en ce que** la région de coin de l'agencement de trous de refroidissement par impact (34) est réalisée sous forme arrondie.

5. Chambre de combustion selon la revendication 1, **caractérisée en ce que** le rapport du nombre de trous de refroidissement par impact (34) et du nombre de trous de refroidissement par effusion (33) est de 1: 1 à 1:3.

6. Chambre de combustion selon la revendication 5, **caractérisée en ce qu'**à chaque fois au moins une rangée de trous de refroidissement par effusion (33) est disposée à l'intérieur de la distance (A), le nombre de rangées de trous de refroidissement par effusion (33) à l'intérieur de la distance (A) étant égal au rapport du nombre de trous de refroidissement par impact (34) au nombre de trous de refroidissement par effusion (33).
